# EUROPÄISCHE PATENTSCHRIFT

(11) **EP 1 859 155 B1**
(45) Veröffentlichungstag und Bekanntmachung des Hinweises auf die Patenterteilung: **24.09.2008**
(21) Anmeldenummer: 05820654.1
(22) Anmeldetag: 28.11.2005
(51) Int. Cl.: F02F 3/00

(54) **ZWEITEILIGER KOLBEN FÜR EINEN VERBRENNUNGSMOTOR**
TWO-PIECE PISTON FOR AN INTERNAL COMBUSTION ENGINE
PISTON EN DEUX PARTIES POUR UN MOTEUR A COMBUSTION INTERNE

(30) Priorität: 08.12.2004 DE 102004058968
(43) Veröffentlichungstag der Anmeldung: 28.11.2007
(73) Patentinhaber: Mahle International GmbH, 70376 Stuttgart (DE)
(72) Erfinder: SCHARP, Rainer, 71665 Vaihingen (DE); MAHR, Bernd, 73207 Plochingen (DE)
(74) Vertreter: Pohle, Reinhard
(86) Internationale Anmeldenummer: PCT/DE2005/002137
(87) Internationale Veröffentlichungsnummer: WO 2006/060987

(56) Entgegenhaltungen:
- DE-A1- 4 203 384
- DE-A1- 10 116 084
- DE-A1- 19 815 989
- US-A- 2 051 547

## Beschreibung

Die Erfindung betrifft einen zweiteiligen Kolben für einen Verbrennungsmotor nach dem Oberbegriff des Anspruches 1.

Aus der Patentschrift DE 42 03 384 C2 ist ein aus einem Kobenboden und einem Kolbenhemd bestehender, zweiteiliger Kolben bekannt, bei dem die beiden Teile des Kolbens mittels eines Bajonettverschlusses miteinander verbunden sind. Hierbei ist an den Kolbenboden ein in das Kolbenhemd greifender Hals angeformt, an dessen Ende vier radial nach außen ragende Riegelnasen vorspringen, die in der Verbindungsstellung unter radial nach innen weisende Riegelvorsprünge des Kolbenhemdes greifen. Zur Arretierung der Drehstellung des Bajonettverschlusses ist an den Unterflächen eines jeden Riegelvorsprunges ein Rastvorsprung ausgebildet, der in jeweils eine Rastausnehmung der zugehörigen Riegelnase greift. Nachteilig ist hierbei die Komplexität des Bajonettverschlusses, der zu einer erheblichen Verteuerung des aus dem Stand der Technik bekannten, zweiteiligen Kolbens führt.

Diesen Nachteil des Standes der Technik zu vermeiden, ist Aufgabe der Erfindung Gelöst wird die Aufgabe mit den im Kennzeichen des Hauptanspruches stehenden Merkmalen. Zweckmäßige Ausgestaltungen der Erfindung sind Gegenstand der Unteransprüche.

Hierbei ist zur Verbindung des Kolbenoberteils mit dem Kolbenunterteil lediglich eine koaxial angeordnete, zylindrische Anformung erforderlich, an deren Ende sich zwei einander gegenüberliegende, hakenförmige, nach radial außen gerichteter Vorsprünge befinden, die bei der Montage der beiden Kolbenteile den Rand einer in das Kolbenunterteil eingearbeiten Öffnung hintergreifen.

Dadurch dass die Öffnung in einem elastisch nachgiebigem Bereich des Kolbenunterteils angordnet ist und sich an dem kolbenbodenabgewandten Rand der Öffnung Rastnasen befinden, ergibt sich eine dauerhaft feste Rastverbindung zwischen Kolbenoberteil und Kolbenunterteil.

Einige Ausführungsbeispiele der Erfindung werden im Folgenden anhand der Zeichnungen beschrieben. Es zeigen
- Fig. 1: einen zweiteiligen Kolben mit einem Oberteil im Schnitt, das über eine erste Ausgestaltung des erfindungsgemäßen Drehverschlusses mit einem Unterteil des Kolbens verbunden ist,
- Fig. 2: einen Schnitt entlang der Linie II-II in Fig. 1, der eine Draufsicht auf eine Öffnung zeigt, die Teil des Drehverschlusses ist,
- Fig. 3: den zweiteiligen Kolben im Schnitt, bei dem das Oberteil und das Unterteil über eine weitere Ausgestaltung des Drehverschlusses miteinander verbunden sind, und
- Fig. 4: einen Teilschnitt durch das Oberteil und das Unterteil des Kolbens, der die Öffnung im Kolbenunterteil zeigt, die Teil des Drehverschlusses ist.

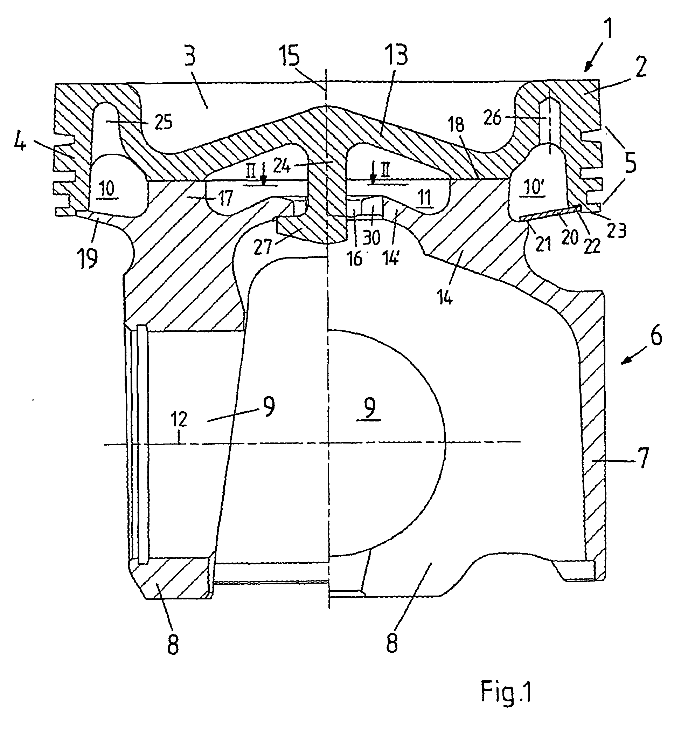

Fig. 1 zeigt in einem aus zwei Hälften bestehenden Schittbild, dessen linke Hälfte in Richtung der Kolbenbolzenachse 12 und dessen rechte Hälfte senkrecht dazu liegt, einen zweiteiligen, gekühlten Kolben 1, der aus einem Kolbenoberteil 2 mit einem Kolbenboden 13 und aus einem Kolbenunterteil 6 besteht. Das Kolbenoberteil 2 weist eine in den Kolbenboden 13 eingeformte Verbrennungsmulde 3 und auf seiner radialen Außenseite eine Ringwand 4 mit einer Ringpartie 5 auf.

Das Kolbenunterteil 6 umfasst einen kastenförmigen Kolbenschaft 7 und zwei damit verbundene Bolzennaben 8 mit je einer Bolzenbohrung 9 zur Aufnahme eines in den Figuren nicht dargestellten Kolbenbolzens. Kolbenbodenseitig wird das Kolbenunterteil 6 von einer Trennwand 14 begrenzt, die nahe der Kolbenachse 15 einen dünnwandigen und elastisch nachgiebigen Trennwandbereich 14' aufweist, in den eine mittig angeordnete Öffnung 16 eingebracht ist, die Element eines Drehverschlusses ist, der das Kolbenoberteil 2 mit dem Kolbenunterteil 6 verbindet.

Auf der dem Kolbenboden 13 abgewandten Unterseite ist radial außen in das Kolbenoberteil 2 ein äußerer Kühlkanal 10, 10' eingeformt, der radial außen von der Ringwand 4 und radial innen teils vom Kolbenboden 13 und teils von einer kolbenbodenseitig auf der Trennwand 14 angebrachten, ringförmigen Tragrippe 17 begrenzt wird, die eine ringförmige Auflage 18 für das Kolbenoberteil 2 bildet.

Die kolbenbodenabgewandte Unterseite des äußeren Kühlkanales 10 kann, wie es in der linken Hälfte des Schnittbildes gemäß Fig. 1 dargestellt ist, von einer an die Tragrippe 17 angeformten, umlaufenden, scheibenförmigen Abdeckung 19 verschlossen sein. Als weitere Möglichkeit, die Unterseite des Kühlkanals 10' zu verschließen, kann gemäß der rechten Hälfte des in Fig. 1 dargestellten Schnittbildes eine ringförmige Tellerfeder 20 verwendet werden, die unter Vorspannung mit ihrer radialen Innenseite auf einer an der radialen Außenseite der Tragrippe 17 angebrachten, umlaufenden Auflage 21 und mit ihrer radialen Außenseite in einer Ausnehmung 22 anliegt, die in der dem Kolbenboden 13 abgewandten Stirnfläche 23 der Ringwand 4 eingeformt ist. Sowohl die Abdeckung 19 als auch die Tellerfeder 20 weisen in den Figuren nicht dargestellte Ölzu- und Ölablauföffnungen auf, über die Kühlöl in den Kühlkanal 10, 10' ein- und daraus wieder abgeleitet wird.

Zur Verbesserung der Kühlwirkung des durch den Kühlkanal 10 fließenden Öles kann die Oberseite des Kühlkanals 10 Kühlrippen 25 aufweisen, wie in der linken Hälfte des Schnittbildes dargestellt ist. Weiterhin ist es möglich, die Kühlwirkung des durch den Kühlkanal 10' fließenden Kühlöles dadurch zu verbessern, dass in der Oberseite des Kühlkanals 10' Bohrungen 26 eingebracht sind, wie die rechte Hälfte des Schnittbildes gemäß Fig. 1 zeigt.

Nach radial innen schließt sich an die Tragrippe 17 ein innerer Kühlkanal 11 an, dessen Oberseite vom Kolbenboden 13 und dessen Unterseite vom Trennwandbereich 14' gebildet werden. Radial außen wird der innere Kühlkanal 11 von der Tragrippe 17 und radial innen von einer koaxial zur Kolbenachse 15 liegenden, zylindrische Anformung 24 begrenzt, die an die Unterseite des Kolbenbodens 13 angeformt ist. Zwischen dem äußeren Kühlkanal 10, 10' und dem inneren Kühlkanal 11 sind in den Figuren nicht dargestellte Überlaufkanäle angeordnet, über die das Kühlöl vom äußeren in den inneren Kühlkanal geleitet wird. Das im inneren Kühlkanal 11 befindliche Kühlöl wird über die Öffnung 16 in das Kolbeninnere ausgeleitet.

An dem dem Kolbenboden 13 abgewandte Ende der zylindrische Anformung 24 sind zwei einander gegenüberliegende, nach radial außen gerichtete, hakenförmige Vorsprünge angebracht, die als hakenförmige Anformungen 27 an der zylindrische Anformung 24 ausgebildet sind und zur Befestigung des Kolbenoberteiles 2 an dem Kolbenunterteil 6 den Rand der Öffnung 16 in der Art eines Drehverschlusses hintergreifen. Sichtbar ist in Fig. 1 nur die linke der beiden Anformungen 27, da die rechte Hälfte von Fig.1 einen senkrecht zur Schnittebene der linke Hälfte von Fig. 1 liegenden Schnitt zeigt, sodass hier der Vorsprung 27 in Blickrichtung hinter der zylindrischen Anformung 24 angeordnet ist und von ihr verdeckt wird. Wie weiter unten näher erläutert wird, trägt hierbei die Elastizität des inneren Trennwandbereiches 14' zur Festigkeit dieses Drehverschlusses bei.

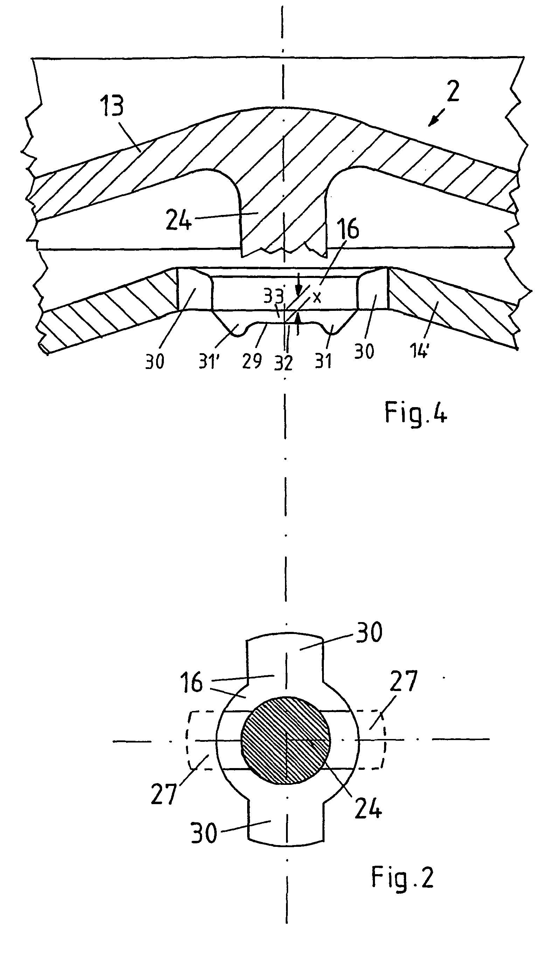

Der in Fig. 2 dargestellte Schnitt entlang der Linie II-II in Fig. 1 zeigt eine Draufsicht auf die in den Trennwandbereich 14' eingeformte Öffnung 16, die, wie auch in Fig. 1 angedeutet ist, zwei einander gegenüberliegende Ausnehmungen 30 aufweist. Dargestellt sind auch die zylindische Anformung 24 im Schnitt und die am kolbenbodenabgewanden Ende der Anformung 24 angeordneten, hakenförmigen Anformungen 27 teils in Draufsicht und teils gestrichelt. In Fig. 2 sind diese in einer Stellung eingezeichnet, in der sie den Rand der Öffnung 16 hintergreifen. Bei der Montage der Kolbenoberteils 2 auf das Kolbenunterteil 6 haben beide Teile 2, 6 eine Stellung zueinander einzunehmen, bei der die hakenförmigen Anformungen 27 um 90° gegenüber der in Fig. 2 gezeigten Stellung verdreht sind, sodass sie durch die Ausnehmungen 30 hindurchgeführt werden können. Ist dadurch das Kolbenoberteil 2 in Anlage an die Auflage 18 des Kolbenunterteils 6 gelangt, und sind dabei die hakenförmigen Anformungen 27 weit genug in die Öffnung 16 eingeführt, wird das Kolbenoberteil 2 um 90° gedreht, und die hakenförmigen Anformungen 27 nehmen die in Fig. 2 gezeigte Position ein, in der sie den Rand der Öffnung 16 hintergreifen und damit das Kolbenoberteil 2 mit dem Kolbenunterteil 6 verbinden.

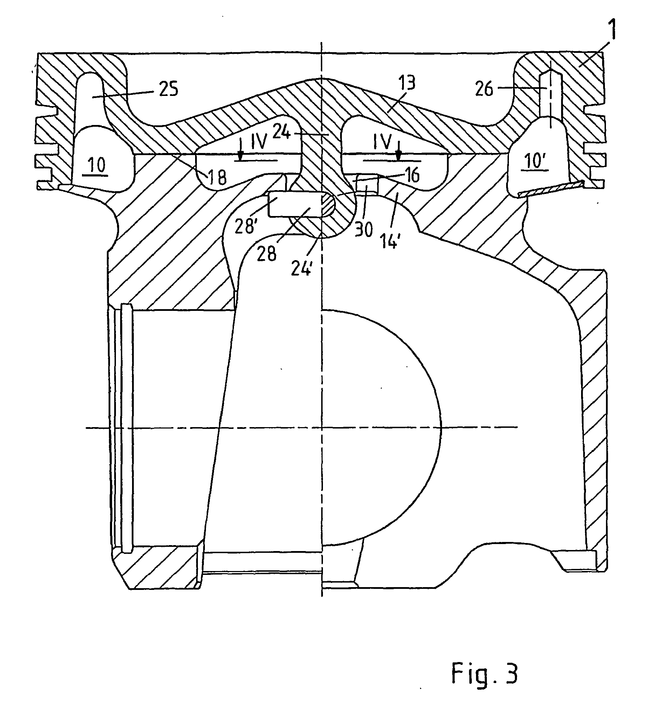

Fig. 3 zeigt eine weitere Ausgestaltung des Drehverschlusses, wobei an dem dem Kolbenboden 13 abgewandten Ende der zylindrische Anformung 24 zwei einander gegenüberliegende Vorsprünge 28' angebracht sind, die von einem Passstift 28 gebildet werden, der in einer durchgehenden Bohrung im kugelförmigen Ende 24' der zylindrischen Anformung 24 angeordnet ist und die Vorsprünge 28' bildend beidseitig über die Bohrung hinausragt. Die Vorsprünge 28' hintergreifen hierbei den Rand der Öffnung 16, wenn der Kolben 1 fertig montiert ist. Wegen der gewählten Darstellungsform, bei der die rechte Hälfte von Fig. 3 einen Schnitt zeigt, der senkrecht zum Halbschnitt der linken Hälfte von Fig. 3 liegt, ist in der linken Hälfte von Fig 3 der Passstift 28 in Seitenansicht und in der rechten Hälfte von Fig. 3 im Querschnitt gezeigt.

Fig. 4 zeigt in einem vergrößerten Teilschnitt die Öffnung 16, deren unterer Rand als Führung 29 für die in Fig. 4 nicht dargestellten Vorsprünge 27, 28' ausgebildet ist. Auf beiden Seiten der Öffnung 16 sind die Ausnehmungen 30 angeordnet, die radiale Abmessungen aufweisen, die größer als die radialen Abmessungen der Vorsprünge 27, 28' sind, sodass bei derjenigen Position des Kolbenoberteils 2 gegenüber dem Kolbenunterteil 6, bei der die Vorsprünge 27, 28' in Richtung der Ausnehmungen 30 weisen, die zylindrische Anformung 24 mit den Vorsprüngen 27, 28' problemlos in die Öffnung 16 eingeführt werden kann. Im Anschluss daran wird das Kolbenoberteil 2 gedreht, sodass die Vorsprünge 27, 28' gezwungen sind, zwei radial einander gegenüberliegende Rastnasen 31, 31' von den auf beiden Seiten der Ausnehmungen 30 angeordneten Rastnasen 31, 31' zu überwinden, wobei der inneren Trennwandbereiches 14' kurzzeitig in Richtung Kolbenboden 13 ausgelenkt wird. Die Rastnasen 31, 31' dienen hierbei als Sicherung gegen ein Lösen des Drehverschlusses.

Bei einer weiteren Drehung des Kolbenoberteils 2 gelangen die Vorsprünge 27, 28' in Kontakt mit dem zwischen den Rastnasen 31, 31' liegenden Bereich 32 der Führung 29, der eine Auflage 33 mit der Dicke "x" aufweist, die geringer als das maximale, axiale Maß des Rastnasen 31, 31' ist. Hierbei wird durch die Auflage 33 erreicht, dass der Trennwandbereich 14' dauerhaft um den Betrag "x" in Richtung Kolbenboden 13 ausgelenkt wird, was auf die zylindrische Anformung 24 und damit auf das Kolbenoberteil 2 eine dauerhafte Vorspannung ausübt, die eine sehr gute Festigkeit des erfindungsgemäßen Drehverschlusses bewirkt.

### Bezugszeichenliste

- x: Dicke der Auflage 33
- 1: Kolben
- 2: Kolbenoberteil
- 3: Verbrennungsmulde
- 4: Ringwand
- 5: Ringpartie
- 6: Kolbenunterteil
- 7: Kolbenschaft
- 8: Bolzennabe
- 9: Bolzenbohrung
- 10, 10': äußerer Kühlkanal
- 11: innerer Kühlkanal
- 12: Kolbenbolzenachse
- 13: Kolbenboden
- 14: Trennwand
- 14': Trennwandbereich
- 15: Kolbenachse
- 16: Öffnung
- 17: Tragrippe
- 18: Auflage
- 19: Abdeckung
- 20: Tellerfeder
- 21: Auflage
- 22: Ausnehmung
- 23: Stirnfläche der Ringwand 4
- 24: zylindrische Anformung
- 24': kugelförmiges Ende der Anformung 24
- 25: Kühlrippe
- 26: Bohrung
- 27: Vorsprung, hakenförmige Anformung
- 28: Passstift
- 28': Vorsprung des Passstiftes 28
- 29: Führung
- 30: Ausnehmung
- 31,31': Rastnase
- 32: Bereich der Führung 29
- 33: Auflage

## Patentansprüche

1. Zweiteiliger Kolben(1) für einen Verbrennungsmotor
- mit einem Kolbenoberteil (2), das den Kolbenboden.(13) bildet, und
- mit einem Kolbenunterteil (6), das mit dem Kolbenoberteil (2) verbunden ist, und auf dessen kolbenbodenabgewandter Seite ein Kolbenschaft (7) und zwei einander gegenüberliegende Bolzennaben (8) mit je einer Bolzenbohrung (9) angeordnet sind,
**dadurch gekennzeichnet,**
- **dass** auf der kolbenbodenabgewandten Seite des Kolbenoberteils (2) eine zur Kolbenachse (15) koaxial liegende, zylindrische Anformung (24) angeordnet ist, an derem kolbenbodenabgewandten Ende zwei einander gegenüberliegende, hakenförmige, nach radial außen gerichtete Vorsprünge (27, 28') angebracht sind,
- **dass** das Kolbenunterteil (6) kolbenbodenseitig von einer mit dem Kolbenschaft (7) und mit den Bolzennaben (8) verbundenen Trennwand (14) begrenzt ist, die koaxial zur Kolbenachse (15) eine Öffnung (16) aufweist, deren radialer Durchmesser kleiner als die radiale Länge der Vorsprünge (27, 28') ist, und die zwei, radial einander gegenüberliegende Ausnehmungen (30) mit radialen Abmessungen aufweist, die größer als die radialen Abmessungen der Vorsprünge (27, 28') sind, und
- **dass** die zylindrische Anformung (24) eine derartige Länge aufweist, dass im Rahmen der Montage des Kolbenoberteils (2) auf das Kolbenunterteil (6) mit Einführen der Vorsprünge (27, 28') in die Ausnehmungen (30) und Verdrehen des Kolbenoberteiles (2) die Vorsprünge (27, 28') den Rand der Öffnung (16) hintergreifen.

2. Kolben nach Anspruch 1, **dadurch gekennzeichnet, dass** die Trennwand (14) radial innen einen koaxial zur Kolbenachse (15) liegenden, elastisch nachgiebigen Trennwandbereich (14') aufweist, in dem die Öffnung (16) angeordnet ist, und der die kolbenbodenabgewandte Seite eines aus Kolbenoberteil (2) und Kolbenunterteil (6) gebildeten, inneren Kühlkanals (11) begrenzt, und dass der kolbenbodenabgewandte Rand der Öffnung (16) auf beiden Seiten der Ausnehmungen (30) Rastnasen (31, 31') und auf den den Ausnehmungen (30) abgewandten Seiten der Rastnasen (31, 31') Auflagen (33) aufweist, deren Dicke "x" geringer als das maximale, axiale Maß der Rastnasen (31, 31') ist.

3. Kolben nach Anspruch 1 oder 2, **dadurch gekennzeichnet, dass** die Vorsprünge als an der zylindrischen Anformung (24) angeordnete und mit der zylindrische Anformung (24) einstückige, hakenförmge Anformungen (27) ausgebildet sind.

4. Kolben nach Anspruch 1 oder 2, **dadurch gekennzeichnet, dass** am kolbenbodenabgewandten Ende der zylindrischen Anformumg (24) ein Passstift (28) angeordnet ist, dessen Enden beidseitig über die Anformung (24) radial hinausragen und **dadurch** die Vorsprünge (28') bilden.

## Claims

1. Two-part piston (1) for an internal combustion engine
- comprising an upper piston part (2), which forms the piston crown (13), and
- comprising a lower piston part (6), which is connected to the upper piston part (2), and on the side of which remote from the piston crown, a piston shaft (7) and two mutually opposing pin bosses (8) each with a pin bore (9) are arranged,
**characterised in that**
- a cylindrical formed-on part (24), which lies coaxially with respect to the piston axis (15), is arranged on the side of the upper piston part (2) remote from the piston crown, at the end of which formed-on part, remote from the piston crown, two opposing, hook-shaped, radially outwardly directed projections (27, 28') are disposed,
- **in that** the lower piston part (6) is delimited on the piston crown side by a partition (14) connected to the piston shaft (7) and to the piston bosses (8), which partition has, coaxially to the piston axis (15), an opening (16), the radial diameter of which is smaller than the radial length of the projections (27, 28'), and which has two radially mutually opposing recesses (30) with radial dimensions which are greater than the radial dimensions of the projections (27, 28'), and
- **in that** the cylindrical formed-on part (24) has a length such that within the scope of assembly of the upper piston part (2) onto the lower piston part (6), with introduction of the projections (27, 28') into the recesses (30) and rotation of the upper piston part (2), the projections (27, 28') engage behind the edge of the opening (16).

2. Piston according to claim 1, **characterised in that** the partition (14) has an elastically resilient partition region (14'), located coaxially with respect to the piston axis (15), radially on the inside, in which partition region the opening (16) is arranged and which delimits the side remote from the piston crown, of an inner cooling channel (11) formed by the upper piston part (2) and the lower piston part (6), and **in that** the edge of the opening (16) remote from the piston crown has catch noses (31, 31') on both sides of the recesses (30), and has contact areas (33) on the sides of the catch noses (31, 31') remote from the recesses (30), the thickness "x" of which contact areas is less than the maximal axial dimension of the catch noses (31, 31').

3. Piston according to claim 1 or 2, **characterised in that** the projections are configured as hook-shaped formed-on parts (27), made in one piece with the cylindrical formed-on part (24) and arranged on the cylindrical formed-on part (24).

4. Piston according to claim 1 or 2, **characterised in that** a fitted stud (28), the ends of which project radially beyond the formed-on part (24) on both sides and thereby form the projections (28'), is arranged at the end of the cylindrical formed-on part (24) remote from the piston crown.

## Revendications

1. Piston (1) en deux parties pour un moteur à combustion interne, comprenant
- une partie supérieure de piston (2), qui forme le fond de piston (13) et
- une partie inférieure de piston (6), qui est assemblée avec la partie supérieure de piston (2) et sur le côté de laquelle, opposé au fond de piston, sont disposés une tige de piston (7) et deux moyeux d'axe (8) en vis-à-vis mutuel avec chacun un alésage d'axe (9),
**caractérisé en ce que**
- une conformation cylindrique (24), coaxiale à l'axe (15) du piston, est disposée sur le côté de la partie supérieure de piston (2) opposé au fond de piston, conformation sur l'extrémité de laquelle, opposée au fond de piston, sont placées deux saillies (27, 28') en forme de crochet, en vis-à-vis l'une de l'autre et dirigées dans la direction radiale extérieure,
- la partie inférieure de piston (6) est limitée du côté fond de piston par une cloison (14) assemblée avec la tige de piston (7) et avec les moyeux d'axe (8), laquelle cloison présente une ouverture (16) coaxiale à l'axe (15) du piston, dont le diamètre radial est plus petit que la longueur radiale des saillies (27, 28'), et comporte deux creux (30) en vis-à-vis mutuel dans la direction radiale avec des dimensions radiales supérieures aux dimensions radiales des saillies (27, 28'), et
- la conformation cylindrique (24) présente une longueur telle que, dans le cadre du montage de la partie supérieure de piston (2) sur la partie inférieure de piston (6), les saillies (27, 28') enserrent le bord de l'ouverture (16) par introduction des saillies (27, 28') dans les creux (30) et rotation de la partie supérieure de piston (2).

2. Piston suivant la revendication 1, **caractérisé en ce que** la cloison (14) comporte dans la direction radiale intérieure une zone de cloison (14'), coaxiale à l'axe (15) du piston, flexible par élasticité, dans laquelle est disposée l'ouverture (16) et qui limite le côté opposé au fond de piston d'un conduit de refroidissement intérieur (11), formé de la partie supérieure de piston (2) et de la partie inférieure de piston (6), et que le bord de l'ouverture (16), opposé au fond de piston, comporte sur les deux côtés des creux (30) des ergots d'encliquetage (31, 31') et sur les côtés des ergots d'encliquetage (31, 31'), opposés aux creux (30), des appuis (33), dont l'épaisseur « x » est plus faible que la cote axiale maximale des ergots d'encliquetage (31, 31').

3. Piston suivant l'une des revendications 1 et 2, **caractérisé en ce que** les saillies sont configurées sous forme de conformations (27) en forme de crochets, disposées sur la conformation cylindrique (24) et d'une seule pièce avec cette dernière (24).

4. Piston suivant l'une des revendications 1 et 2, **caractérisé en ce qu'**une goupille de serrage (28) est disposée à l'extrémité, opposée au fond de piston, de la conformation cylindrique (24), goupille dont les extrémités dépassent des deux côtés de la conformation (24) dans la direction radiale et forment de ce fait les saillies (28').
